Europäisches Patentamt

European Patent Office

Office européen des brevets

(11) Veröffentlichungsnummer: **0 080 180**
**B1**

# EUROPÄISCHE PATENTSCHRIFT

(45) Veröffentlichungstag der Patentschrift:
**27.08.86**

(21) Anmeldenummer: **82110684.6**

(22) Anmeldetag: **19.11.82**

(51) Int. Cl.⁴: **G 05 D 16/06,** G 05 D 16/20,
F 16 K 31/06

(54) **Gasarmatur mit einem Magnetventil und einem Druckregler.**

(30) Priorität: **25.11.81 DE 3146590**

(43) Veröffentlichungstag der Anmeldung:
**01.06.83 Patentblatt 83/22**

(45) Bekanntmachung des Hinweises auf die Patenterteilung:
**27.08.86 Patentblatt 86/35**

(84) Benannte Vertragsstaaten:
**AT BE CH FR GB IT LI NL**

(56) Entgegenhaltungen:
**EP - A - 0 039 000**
**DE - A - 2 601 055**
**DE - A - 2 604 358**
**DE - A - 2 909 768**
**DE - A - 2 920 816**
**US - A - 3 183 932**
**US - A - 4 298 943**

(73) Patentinhaber: **Karl Dungs GmbH & Co., D-7067 Urbach
(DE)**

(72) Erfinder: **Dungs, Karl, Künkelinstrasse 52,
D-7060 Schorndorf (DE)**
Erfinder: **Feucht, Friedrich, Weinbergweg 56,
D-7064 Remshalden (DE)**
Erfinder: **Schmid, Hermann, Gerundweg 10,
D-7067 Urbach/N. (DE)**
Erfinder: **Schwarz, Walter, Im Schöllerfeld 15,
D-7060 Schorndorf/Weiler (DE)**

(74) Vertreter: **Patentanwälte Kohler - Schwindling - Späth,
Hohentwielstrasse 41, D-7000 Stuttgart 1 (DE)**

ACTORUM AG

## Beschreibung

Die Erfindung betrifft eine Gasarmatur mit einem Magnetventil und einem Druckregler, die einen gemeinsamen, mit einem Ventilsitz zusammenwirkenden Ventilkörper aufweisen, an dem von der einen Seite her der Reglerantrieb und von der anderen Seite her der Magnetanker mit entgegengesetzt gleicher Wirkungsrichtung derart angreifen, dass der Ventilkörper bei unerregtem Magnetventil in der geschlossenen Stellung gehalten und bei erregtem Magnetventil zur Betätigung durch den Reglerantrieb freigegeben wird, der eine vom Druck des zu regelnden Gases beaufschlagte Membran und eine der Stellkraft der Membran entgegenwirkende Regelfeder aufweist.

Eine solche Gasarmatur ist beispielsweise aus der DE-A-2 920 816 bekannt. Die Membran des Gasdruckreglers dieser bekannten Armatur ist auf einer Seite dem Gasdruck ausgesetzt und an der anderen Seite von einer dem Gasdruck entgegenwirkenden Schraubendruckfeder belastet. An der dem Gasdruck ausgesetzten Seite der Membran befindet sich eine die Membran mit dem Ventilkörper verbindende Stange. Der Magnetanker befindet sich an der der Membran abgewandten Seite des Ventilkörpers.

Eine solche Anordnung hat den Nachteil, dass sie einerseits ein grosses Bauvolumen hat, weil zu beiden Seiten der aus Membran und Ventilkörper bestehenden Einheit noch Glieder mit erheblicher axialer Ausdehnung vorhanden sind, nämlich einerseits die Regelfederung und andererseits das Magnetventil. Dabei ist von weiterem Nachteil, dass einerseits die Armatur zur Herstellung der elektrischen Anschlüsse von der Magnetseite und zum Einstellen des Reglers von der Seite der Regelfeder her zugänglich sein muss. Demgemäss ist der Einbau solcher Gasarmaturen sowohl durch den grossen Platzbedarf als auch durch die Notwendigkeit, für eine einwandfreie Zugänglichkeit Sorge zu tragen, stark beschränkt.

Ferner ist aus der DE-A-2 601 055 eine Gasarmatur mit einem Magnetventil und einem Druckregler bekannt, bei der das Magnetventil und der Druckregler jeweils einen eigenen, mit einem Ventilsitz zusammenwirkenden Ventilkörper besitzen. Beide Ventilkörper sind in Strömungsrichtung des Gases hintereinandergeschaltet. An dem Ventilkörper des Druckreglers greift einerseits eine vom Gasdruck beaufschlagte Membran und andererseits eine Schraubenzugfeder an, die sich in den hohlen Magnetanker des Magnetventils hineinerstreckt. Diese Anordnung hat nicht nur den Nachteil, dass zwei voneinander getrennte Ventilkörper mit zugeordneten Ventilsitzen benötigt werden, sondern es besteht noch ein besonderer Mangel darin, dass die innerhalb des Magnetankers angeordnete Regelfeder nicht zum Einstellen zugänglich ist.

Der Erfindung liegt die Aufgabe zugrunde, eine Gasarmatur der eingangs beschriebenen Art so auszubilden, dass sowohl ihr Bauvolumen als auch der Platzbedarf zum Herstellen von Anschlüssen und Justieren vermindert wird.

Diese Aufgabe wird nach der Erfindung dadurch gelöst, dass bei einer Gasarmatur der eingangs genannten Art der Magnetanker hohl ausgebildet ist und die Regelfeder durch den hohlen Anker hindurch am Ventilkörper angreift.

Bei der erfindungsgemässen Gasarmatur sind demnach Magnetventil und Regelfeder an der gleichen Seite des Reglerantriebes und insbesondere einer als Regelantrieb dienenden Membran angeordnet, wodurch einerseits das Bauvolumen in Bewegungsrichtung des Ventils vermindert werden kann und ausserdem die Gasarmatur zum Herstellen der Anschlüsse und zu Justierzwecken nur noch von einer Seite her zugänglich zu sein braucht. Daher kann eine solche Gasarmatur auch dann verwendet werden, wenn nur wenig Platz für ihre Unterbringung zur Verfügung steht und ausserdem die eingebaute Armatur von anderen Bauelementen bis auf die Anschluss- und Justierseite umgeben ist. Dadurch wird der Anwendungsbereich einer solchen Gasarmatur bedeutend erweitert.

Bei einer bevorzugten Ausführungsform der Erfindung wird die Regelfeder von einer koaxial zum Anker angeordneten Schraubenzugfeder gebildet, Auf diese Weise lässt sich die Regelfeder im wesentlichen innterhalb des Ankters unterbringen und beansprucht daher überhaupt keinen zusätzlichen Platz.

Zur Verbindung der Regelfeder mit dem Ventilkörper kann eine den Ventilkörper tragende Stange in eine Bohrung des Ankers hineinragen und an ihrem vom Ventilkörper abgewandten Ende mit der Regelfeder verbunden sein. Die Anwendung einer solchen Stange bietet viele Möglichkeiten des Anschlusses einer Feder, die ihrerseits beliebige Gestalt haben kann. Beispielsweise wäre denkbar, als Regelfeder eine Schenkelfeder zu verwenden, die mit einem Schenkel in eine Querbohrung der aus dem Anker herausragenden Stange eingreift. Auch die Anwendung von Membran- oder Blattfedern wäre denkbar.

Bevorzugt wird jedoch die bereits oben erwähnte Schraubenzugfeder. Wenn eine solche Schraubenzugfeder Verwendung findet, kann in Abstand von dem vom Ventilkörper abgewandten Ende des Ankers ein Führungsrohr angeordnet sein, in dem ein Gleitstück unverdrehbar geführt ist, das ein Innengewinde aufweist und mit einer koaxial zum Führungsrohr gelagerten Stellschraube in Eingriff steht und an dem ein Ende der Schraubenzugfeder befestigt ist. Durch Verdrehen der Stellschraube lässt sich dann das Gleitstück im Führungsrohr verschieben und dadurch die Vorspannung der Schraubenzugfeder ändern, wie es zum Justieren der Regelcharakteristik des Gasdruckreglers erforderlich ist.

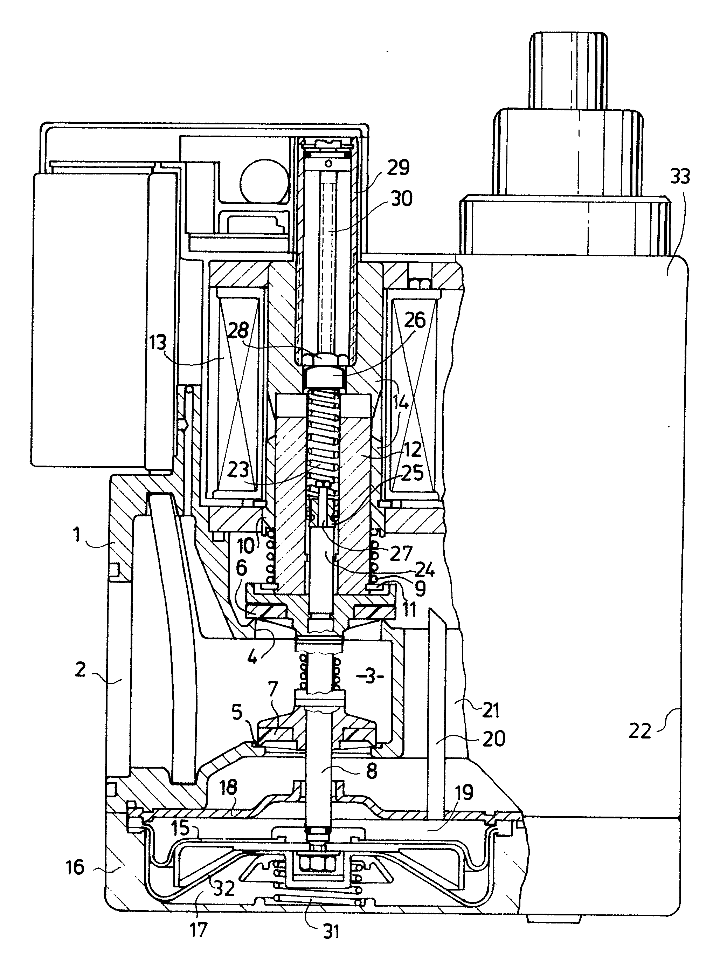

Die Erfindung wird im folgenden anhand des in der Zeichnung dargestellten Ausführungsbeispiels näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Die Zeichnung zeigt einen Querschnitt durch eine Gasarmatur nach der Erfindung.

Die in der Zeichnung dargestellte Gasarmatur weist ein Gehäuseteil 1 auf, das in einer ebenen Seitenwand eine Öffnung 2 als Gaseingang aufweist, an die sich eine Kammer 3 anschliesst, die in zwei zueinander parallelen Wänden, die auf der Wand mit dem Gaseingang 2 senkrecht stehen, zwei Ventilsitze 4 und 5 aufweist. Mit den Ventilsitzen wirken zwei Ventilteller 6 und 7 zusammen, die auf einer gemeinsamen Stange 8 starr befestigt sind. Die Ventilsitze 4, 5 und die Ventilteller 6, 7 sind so ausgebildet, dass sie den gleichen wirksamen Querschnitt haben und ausserdem stets beide Ventilsitze gemeinsam verschlossen oder gemeinsam gleichweit geöffnet sind. Bei dem in der Zeichnung dargestellten Ausführungsbeispiel liegen beide Ventilteller 6 und 7 an den zugeordneten Ventilsitzen 4 bzw. 5 von oben an. Im Ruhezustand werden die Ventilteller von einer Schraubendruckfeder 9 geschlossen gehalten, die sich mit ihrem in der Zeichnung oberen Ende an einem gehäusefesten Widerlager 10 und mit ihrem unteren Ende an einem Sprengring 11 abstützt, der in eine Aussennut am unteren Ende eines Magnetankers 12 eingesetzt ist. Der Magnetanker 12 sitzt in der genannten Ruhelage auf der Oberseite des oberen Ventiltellers 6 auf, wie es in der Zeichnung dargestellt ist. Dieser Ventilanker 12 ragt in die Spule 13 eines Elektromagneten hinein, die mit einer Magnetschlusshülse 14 versehen ist. Wird die Spule 13 an eine Stromquelle angeschlossen und dadurch der Elektromagnet erregt, wird der Magnetanker 12 entgegen der Kraft der Schraubendruckfeder 19 vom Ventilteller 6 abgehoben, so dass der die Ventilteller 6 und 7 umfassende Ventilkörper unbelastet ist und demgemäss das von diesem Ventilkörper und den Ventilsitzen 4, 5 gebildete Magnetventil öffnen kann.

Wie weit das Magnetventil öffnet, wird von dem Gasdruckregler bestimmt, der als Regelglied den Ventilkörper 6, 7 umfasst und als Antrieb für den Regelkörper eine Membran 15 besitzt, die sich in einer in einem unteren Gehäuseabschnitt 16 ausgesparten Kammer 17 befindet. Diese Kammer 17 ist von dem oberen Gehäuseabschnitt durch eine Wand 18 abgetrennt, durch welche die die Ventilteller 6, 7 tragende Stange 8 hindurchgeführt ist. Das Ende der Stange ist an der Membran 15 befestigt. Der zwischen der Membran 15 und der Trennwand 18 eingeschlossene Raum 19 steht über ein Rohr 20 mit dem Raum 21 im oberen Gehäuseabschnitt in Verbindung, der sich an die Aussenseiten der Ventilteller 6, 7 anschliesst und mit einer Ausgangsöffnung der Gasarmatur in Verbindung steht, die sich in nicht näher dargestellter Weise in der Seitenwand 22 des oberen Gehäuseabschnittes befindet, die der Seitenwand mit dem Gaseingang 2 gegenüberliegt.

Die Grösse des geregelten Durchlasses wird durch das Gleichgewicht zwischen dem auf die Membran 15 wirkenden, ausgangsseitigen Gasdruck und der Kraft einer Regelfeder 23 bestimmt, bei der es sich um eine Schraubenzugfeder handelt, die an dem der Membran 15 entgegengesetzten Ende der Stange 8 angreift. Zu diesem Zweck weist der Magnetanker 12 eine zentrale Bohrung auf, in welche die Stange 8 mit ihrem Ende 24 eingreift. Die Schraubenzugfeder 23 wiest an ihren Enden Anschlussstücke 25 bzw. 26 auf, von denen das eine Anschlussstück 25 mittels einer Schraube 27 an dem Ende 24 der Stange 8 befestigt ist. Das andere Anschlussstück 26 weist einen prismatischen, insbesondere sechseckigen Abschnitt 28 auf, der in ein Führungsrohr 29 mit entsprechendem Querschnitt eingreift, so dass das Führungsstück 28 in dem Führungsrohr 29 zwar verschiebbar, aber unverdrehbar gehalten ist. Weiterhin ist das Anschlussstück 26 mit einem Innengewinde versehen, in das eine Stellschraube 30 eingreift, die in dem in der Zeichnung oberen Ende des Führungsrohres 29 verdrehbar, aber axial unverschiebbar gehalten ist. Das Führungsrohr 29 ist im Abstand vom oberen Ende des Magnetankers angeordnet und ist in der Magnetschlusshülse 14 des Ventiles befestigt, beispielsweise eingeschraubt. Es ist ersichtlich, dass durch Drehen der Stellschraube 30 das in dem Führungsrohr 29 gelagerte Anschlussstück 28 in dessen Längsrichtung verschiebbar und dadurch die Spannung der Schraubenzugfeder 23 veränderbar ist. Damit ist auch die Kraft veränderbar, die erforderlich ist, um die Durchlassöffnung zwischen den Ventilsitzen 4, 5 und dem Ventilkörper 6, 7 zur Regelung des Gasdruckes zu verengen. Die Anwendung zweier Ventilsitze und Ventilkörper, die den gleichen Wirkungsquerschnitt aufweisen und von denen der eine im Öffnungssinn und der andere im Schliesssinn vom Gasdruck beaufschlagt wird, hat den besonderen Vorteil, dass die Wirkungsweise des Ventils vom Eingangs-Gasdruck völlig unabhängig ist, ohne dass zusätzliche Kompensationsmassnahmen getroffen werden müssen, und dass gleichzeitig sehr grosse Querschnitte für den Gasfluss zur Verfügung stehen.

Die auf der dem Ventilkörper 6, 7 gegenüberliegenden Seite der Membran 15 angeordnete Schraubendruckfeder 31 hat nur den Zweck, eine Sicherheitsmembran 32 in der gewünschten Lage zu halten. Ihre Kraft ist so gering, dass sie für die Regelung des Gasdurchflusses keine nennenswerte Rolle spielt. Auch findet diese Feder 31, deren Stärke nicht verstellbar zu sein braucht, in der Kammer 17 Platz, die zur Unterbringung der Membran 15 unter Berücksichtigung des Regelhubes benötigt wird, ohne dass eine Vergrösserung dieser Kammer erforderlich wäre.

Bei der dargestellten Ausführungsform der Erfindung schliesst sich an die beschriebene Kombination von Magnetventil und Gasdruckregler noch ein weiteres Magnetventil 33 üblicher Bauart an, das hier nicht weiter beschrieben zu werden braucht. Die Erfindung ist davon unabhängig, ob ein solches Ventil folgt oder nicht. Ebenso wenig ist es notwendig, dass der Ventilkörper zwei Ventilteller 6, 7 umfasst. Die Erfindung ist bei Gasarmaturen mit Ventilkörpern beliebiger Ausbildung anwendbar, und zwar auch dann, wenn die Form des Ventilkörpers die Anwendung besonderer Massnahmen zum Ausgleich des Druckes des zuströmenden Gases erforderlich macht. Demgemäss kann die dargestellte Ausführungsform der Erfindung in vielfältiger Weise verändert werden, ohne den Rahmen der Erfindung zu verlassen.

**Patentansprüche**

1. Gasarmatur mit einem Magnetventil und einem Druckregler, die einen gemeinsamen, mit einem Ventilsitz (4, 5) zusammenwirkenden Ventilkörper (6, 7) aufweisen, an dem von der einen Seite her der Reglerantrieb (15, 23) und von der anderen Seite her der Magnetanker (12) mit entgegengesetzt gleicher Wirkungsrichtung derart angreifen, dass der Ventilkörper (6, 7) bei unerregtem Magnetventil in der geschlossenen Stellung gehalten und bei erregtem Magnetventil zur Betätigung durch den Reglerantrieb (15, 23) freigegeben wird, der eine vom Druck des zu regelnden Gases beauchschlagte Membran (15) und eine der Stellkraft der Membran (15) entgegenwirkende Regelfeder (23) aufweist, dadurch gekennzeichnet, dass der Magnetanker (12) hohl ausgebildet ist und die Regelfeder (23) durch den hohlen Anker hindurch am Ventilkörper (6, 7) angreift.

2. Gasarmatur nach Anspruch 1, dadurch gekennzeichnet, dass die Regelfeder (23) von einer koaxial zum Anker (12) angeordneten Schraubenzugfeder gebildet wird.

3. Gasarmatur nach Anspruch 1 oder 2, dadurch gekennzeichnet, dass eine den Ventilkörper (6, 7) tragende Stange (8) in eine Bohrung des Ankers (12) hineinragt und an ihrem vom Ventilkörper (6, 7) abgewandten Ende mit der Regelfeder (23) verbunden ist.

4. Gasarmatur nach den Ansprüchen 2 und 3, dadurch gekennzeichnet, dass im Abstand von dem vom Ventilkörper (6, 7) abgewandten Ende des Ankers (12) ein Führungsrohr (29) angeordnet ist, in dem ein Gleitstück (26, 28) unverdrehbar geführt ist, das ein Innengewinde aufweist und mit einer koaxial zum Führungsrohr (29) gelagerten Stellschraube (30) in Eingriff steht und an dem ein Ende der Schraubenzugfeder (23) befestigt ist.

**Claims**

1. Gas fitting with a magnetic valve and a pressure regulator which comprise a common valve body (6, 7) co-operating with a valve seat (4, 5) and engaged from one side by the regulator drive (15, 23) and from the other side by the magnet armature (12) having the identically opposite direction of action so that when the magnetic valve is not energised, the valve body (6, 7) is maintained in the closed position while when it is energised, the valve body (6, 7) is free to be actuated by the regulator drive (15, 23) which comprises a diaphragm (15) which is subject to the pressure of the gas to be regulated and also a regulating spring (23) counteracting the positioning force of the diaphragm (15), characterised in that the magnet armature (12) is of hollow construction, the regulating spring (23) engaging the valve body (6, 7) through the hollow armature.

2. Gas fitting according to Claim 1, characterised in that the regulating spring (23) is constituted by a coil draw spring disposed coaxially of the armature (12).

3. Gas fitting according to Claim 1 or 2, characterised in that a rod (8) carrying the valve body (6, 7) penetrates a bore in the armature (12) and is connected to the regulating spring (23) by its end which is remote from the valve body (6, 7).

4. Gas fitting according to Claims 2 and 3, characterised in that there is disposed at a distance from the end of the armature (12) which is remote from the valve body (6, 7) a guide tube (29) in which there is non-rotatably guided a slide member (26, 28) having an internal screwthread and engaging a setscrew (30) mounted coaxially of the guide tube (29) and on which one end of the coil drawn spring (23) is attached.

**Revendications**

1. Accessoire pour conduite de gaz comprenant une vanne magnétique et un régulateur de pression, qui présentent un corps de vanne (6, 7) commun, qui coopère avec un siège de vanne (4, 5) et sur lequel agissent, d'un côté, la commande du régulateur (15, 23) et, de l'autre côté, l'armature d'aimant (12), suivant une même direction d'action et dans des sens opposés, de telle façon que le corps de vanne (6, 7) soit maintenu dans la position fermée lorsque la vanne magnétique n'est pas excitée et qu'il soit, lorsque la vanne magnétique est excitée, libéré pour être actionné par la commande du régulateur (15, 23) qui présente une membrane (15) sollicitée par la pression du gaz à régler et un ressort de réglage (23) agissant à l'encontre de la force de réglage de la membrane (15), caractérisé en ce que l'armature d'aimant (12) est réalisée sous forme creuse et en ce que le ressort de réglage (23) agit, à travers l'armature creuse, sur le corps de vanne (6, 7).

2. Accessoire pour conduite de gaz suivant la revendication 1, caractérisé en ce que le ressort de réglage (23) est formé d'un ressort de traction hélicoïdal agencé coaxialement à l'armature (12).

3. Accessoire pour conduite de gaz suivant l'une des revendications 1 et 2, caractérisé en ce qu'une tige (8) supportant le corps de vanne (6, 7) fait saillie dans une alésage de l'armature (12) et en ce qu'à son extrémité opposée au corps de vanne (6, 7) elle est reliée au ressort de réglage (23).

4. Accessoire pour conduite de gaz suivant les revendications 2 et 3, caractérisé en ce que, à distance de l'extrémité de l'armature (12), opposée au corps de vanne (6, 7), est agencé un tube de guidage (29) dans lequel est guidé de manière à ne pas pouvoir tourner un coulisseau (26, 28) qui présente un filet interne et est en prise avec une vis de réglage (30) supportée coaxialement au tube de guidage (29) et sur lequel est fixée une extrémité du ressort de traction hélicoïdal (23).